# EUROPEAN PATENT APPLICATION

(11) **EP 4 520 538 A1**
(43) Date of publication of application: **12.03.2025**
(21) Application number: 24196915.3
(22) Date of filing: 28.08.2024
(51) Int. Cl.: B41J 3/407, B41J 15/04

(54) **PRINTING APPARATUS**

(30) Priority: 06.09.2023 JP 2023144217
(71) Applicant: Seiko Epson Corporation, Tokyo 160-8801 (JP)
(72) Inventor: SATO, Ryuichi, Suwa-shi, Nagano, 392-8502 (JP); NUNOKAWA, Yohei, Suwa-shi, Nagano, 392-8502 (JP); SHIBATA, Yohei, Suwa-shi, Nagano, 392-8502 (JP); OKUDA, Yasumichi, Suwa-shi, Nagano, 392-8502 (JP)
(74) Representative: MERH-IP Matias Erny Reichl Hoffmann Patentanwälte PartG mbB

(57) **Abstract**

A printing apparatus includes a first shaft around which an adhesive sheet in which a protective sheet is provided at an adhesive layer formed at a base material is wound, a second shaft around which the protective sheet peeled off from the adhesive sheet fed out from the first shaft is wound, a driving mechanism configured to rotate the second shaft, an upper surface configured to support the adhesive sheet from which the protective sheet is peeled off and the adhesive layer is exposed, a guide portion configured to cause a fabric to pass through an upper position in a vertically upward direction of the first shaft and the second shaft and guide the fabric toward the upper surface, and a printing unit configured to perform printing on the fabric attached to the adhesive sheet in the upper surface.

## Description

The present application is based on, and claims priority from JP Application Serial Number 2023-144217, filed September 6, 2023, the disclosure of which is hereby incorporated by reference herein in its entirety.

### BACKGROUND

### 1. Technical Field

The present disclosure relates to a printing apparatus.

### 2. Related Art

JP 2013-006315 A discloses an image forming apparatus including an attachment unit that bonds a printing base material fed out from a roll to an adhesive surface of a support base material fed out from a roll-shaped feed roll to form a composite base material. In addition, it is disclosed that the image forming apparatus includes a liquid attachment unit that forms an image by ejecting liquid onto the printing base material of the composite base material produced by the attachment unit.

The support base material may be provided with a protective sheet for protecting the adhesive surface. However, in the image forming apparatus of JP 2013-006315 A, no consideration is given to a process of the protective sheet that is peeled off from the support base material when the printing base material is attached to the support base material by the attachment unit. For this reason, there is a risk that the protective sheet peeled off from the support base material reduces workability for a user in the process of attaching the printing base material to the support base material.

### SUMMARY

A printing apparatus includes a first shaft around which an adhesive sheet is wound, the adhesive sheet including a base material and an adhesive layer formed on the base material and being provided with a protective sheet on the adhesive layer, a second shaft around which the protective sheet is wound, the protective sheet being peeled off from the adhesive sheet fed out from the first shaft, a driving mechanism configured to rotate the second shaft, a support portion configured to support the adhesive sheet from which the protective sheet is peeled off and the adhesive layer is exposed, a guide portion configured to pass a fabric through an upper position being vertically above the first shaft and the second shaft and guide the fabric toward the support portion, and a printing unit configured to perform printing on the fabric attached to the adhesive sheet at the support portion.

### BRIEF DESCRIPTION OF THE DRAWINGS

FIG. 1 is a schematic side view of a printing apparatus according to Embodiment 1.
FIG. 2 is a schematic front view illustrating the printing apparatus.
FIG. 3 is a perspective view illustrating a feeding unit of the printing apparatus.
FIG. 4 is a perspective view illustrating a first shaft of the feeding unit.
FIG. 5 is a perspective view illustrating a shaft holding portion of the feeding unit.
FIG. 6 is a front view illustrating the printing apparatus to which a guide portion is mounted.
FIG. 7 is a side view illustrating the printing apparatus to which the guide portion is mounted.
FIG. 8 is a schematic side view illustrating the printing apparatus to which the guide portion is mounted.
FIG. 9 is a schematic side view illustrating the printing apparatus to which the guide portion is mounted.
FIG. 10 is a schematic side view illustrating the printing apparatus to which the guide portion is mounted.
FIG. 11 is a schematic side view illustrating a printing apparatus according to Embodiment 2.
FIG. 12 is a schematic side view illustrating a printing apparatus according to Embodiment 3.

### DESCRIPTION OF EMBODIMENTS

Hereinafter, the present disclosure will be described based on embodiments. In each of the drawings, the same reference signs denote the same members, and redundant description will be omitted. Note that, in the present specification, terms "same", "identical", and "simultaneously" do not only mean complete sameness. For example, in the present specification, the terms "same", "identical", and "simultaneously" include cases of sameness in consideration of measurement errors. Further, for example, in the present specification, the terms "same", "identical", and "simultaneously" include cases of sameness in consideration of manufacturing variations of members.

In addition, for example, in the present specification, the terms "same", "identical", and "simultaneously" include cases of sameness as long as functions are not impaired. Thus, for example, "both dimensions are the same" means that a dimensional difference between both the dimensions is within ±5% of either of the dimensions, and particularly may be within ±3% in consideration of measurement errors and manufacturing variations of members.

### 1. Embodiment 1

A printing apparatus 11 is, for example, an ink jet-type printer configured to eject ink serving as one example of liquid to a sheet, a fabric F, or the like which is an example of a medium P, to print an image of a character, a photo, or the like. In the present embodiment, when printing is performed on the fabric F, the printing apparatus 11 performs printing by ejecting ink onto the fabric F attached to an adhesive sheet AS. Therefore, the fabric F attached to the adhesive sheet AS is an example of the medium P. In the following description, the fabric F attached to the adhesive sheet AS may be referred to as the "fabric F of attachment specification".

The adhesive sheet AS includes a base material and an adhesive layer formed of an adhesive at the base material. As the base material, for example, woodfree paper can be employed. As the adhesive forming the adhesive layer, for example, an acrylic adhesive can be employed. The adhesive layer of the adhesive sheet AS before the fabric F is attached is covered with a protective sheet SS. As the protective sheet SS, for example, glassine paper, laminated paper in which a resin film is laminated on one side or both sides, a resin film such as polyvinyl chloride, synthetic paper, or the like can be employed.

Note that, X, Y, and Z in each drawing represent three spatial axes orthogonal to one another. In the present description, directions along these axes are an X-axis direction, a Y-axis direction, and a Z-axis direction. When an orientation is specified, positive and negative signs are used for direction notation with "+" for a positive direction and "-" for a negative direction, and an orientation where an arrow in each drawing is directed is a + direction and an opposite direction to the arrow is a - direction.

Additionally, the Z-axis direction indicates a gravity direction, where a +Z direction indicates a vertically downward direction, and a -Z direction indicates a vertically upward direction. Further, a plane including the X-axis and the Y-axis is described as an X-Y plane, a plane including the X-axis and the Z-axis is described as an X-Z plane, and a plane including the Y-axis and the Z-axis is described as a Y-Z plane. Further, the X-Y plane is a horizontal plane. Furthermore, the three spatial axes of X, Y, and Z that are not limited to positive and negative directions will be described as the X-axis, Y-axis, and Z-axis.

The X-axis direction is an example of a direction intersecting a transport direction of the medium P in the printing apparatus 11, that is, a width direction of the medium P, and is also an example of a width direction of the printing apparatus 11. Further, the X-axis direction is a horizontal direction along an installation surface G which is a horizontal surface on which the printing apparatus 11 is installed. Further, when viewed from an operator located on a front surface side of the printing apparatus 11, a +X direction is on a left side and a -X direction is on a right side. Note that the front surface of the printing apparatus 11 in the present embodiment is a surface on a side on which a heating unit 51 is provided.

The Y-axis direction is a device depth direction of the printing apparatus 11. Further, the Y-axis direction is a horizontal direction along the installation surface G. A +Y direction of the Y-axis direction is a direction from a rear surface of the printing apparatus 11 toward the front surface of the printing apparatus 11, and a -Y direction is a direction from the front surface of the printing apparatus 11 toward the rear surface of the printing apparatus 11. In addition, in the following description, the +Y direction may be referred to as a "forward direction" and the -Y direction may be referred to as a "rearward direction".

The Z-axis direction is a normal direction with respect to the installation surface G, and is a height direction of the printing apparatus 11. In the following description, the +Z direction may be referred to as a "downward direction" and the -Z direction may be referred to as an "upward direction".

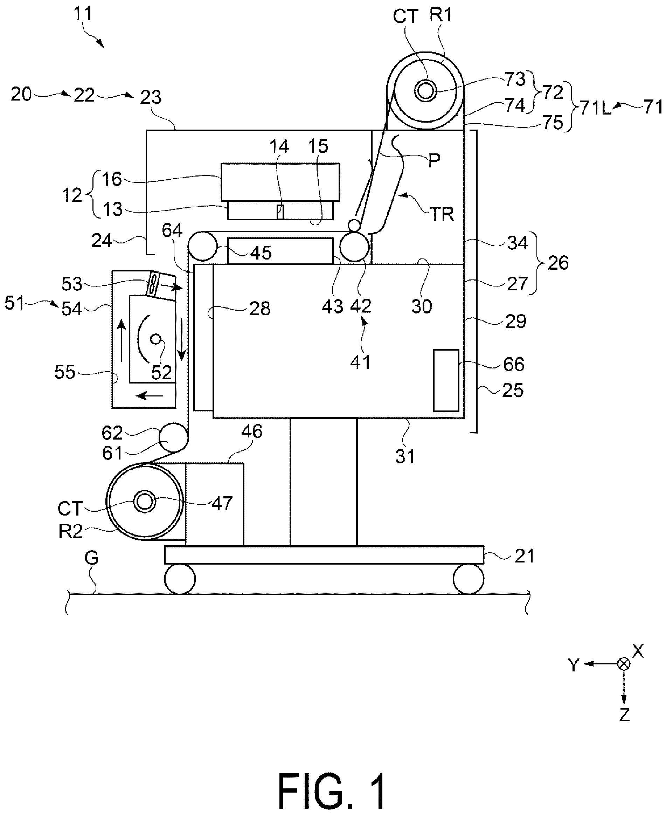

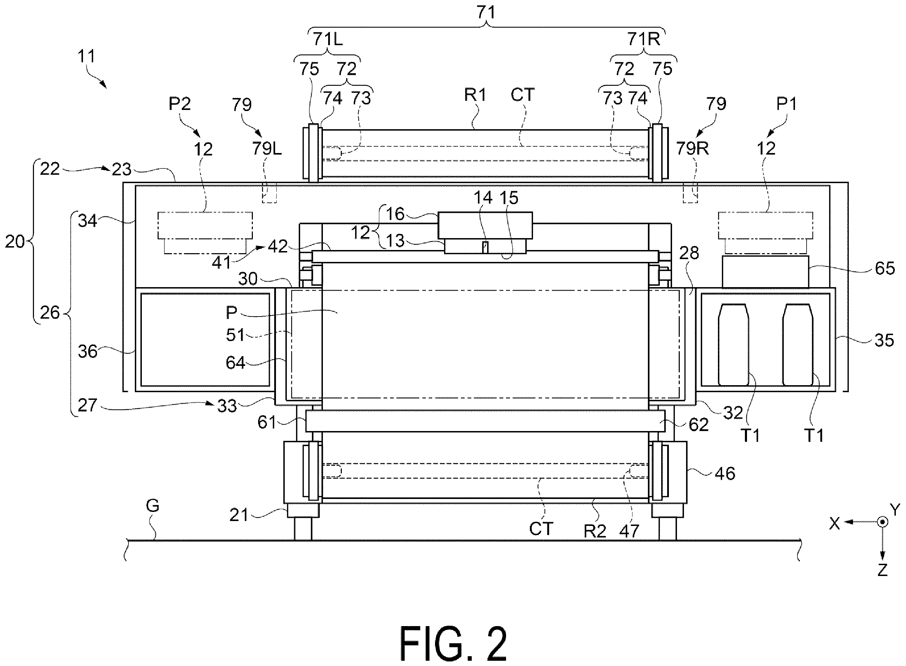

As illustrated in FIGS. 1 and 2, the printing apparatus 11 includes a printing unit 12. The printing unit 12 is configured to print an image on the medium P. Specifically, the printing unit 12 prints an image on the medium P by ejecting ink onto the medium P. The medium P also includes the fabric F of the attachment specification to be produced at an upper surface 23 described later. The printing unit 12 prints an image on the medium P being transported in the +Y direction.

The printing unit 12 includes a head 13. The head 13 includes a nozzle surface 15 at which one or more nozzles 14 open. The nozzle surface 15 faces the medium P. The head 13 ejects ink from the nozzle 14.

The printing unit 12 includes a carriage 16. The carriage 16 is equipped with the head 13. In an example, the carriage 16 performs scanning with respect to the medium P. That is, the carriage 16 moves in the X-axis direction. More specifically, the carriage 16 reciprocates in the +X direction and the -X direction. In this manner, the head 13 can eject the ink over the width of the medium P. Thus, the printing apparatus 11 is a serial printer. The printing apparatus 11 may be a line printer that can eject ink at the same time over the width of the medium P.

The printing unit 12 is displaced between a maintenance position P1 and a cleaning position P2 by reciprocation in the X-axis direction. The two printing units 12 indicated by two-dot chain lines in FIG. 2 are located at the maintenance position P1 and the cleaning position P2, respectively.

At the maintenance position P1, maintenance of the printing unit 12 is performed by a maintenance unit 65. At the cleaning position P2, the printing unit 12 is cleaned by a user, for example.

The printing apparatus 11 includes an exterior member 22 and a frame 26 constituting a housing of the apparatus main body 20, and a leg portion 21. The leg portion 21 is in contact with the installation surface G where the printing apparatus 11 is installed. The exterior member 22 is attached to the frame 26.

The exterior member 22 includes an upper surface 23, a front surface 24, and a rear surface 25 that define an outer contour of the printing apparatus 11 and the apparatus main body 20. The upper surface 23 is a surface facing in the -Z direction, and defines a part of the outer contour of the printing apparatus 11 and the apparatus main body 20 in the -Z direction. The front surface 24 is a surface facing in the +Y direction, and defines a part of the outer contour of the printing apparatus 11 and the apparatus main body 20 in the +Y direction. The rear surface 25 is a surface facing in the -Y direction, and defines the outer contour of the printing apparatus 11 and the apparatus main body 20 in the -Y direction.

The frame 26 is formed of a sheet metal, for example. The frame 26 supports various configurations included in the printing apparatus 11. The frame 26 includes a main frame 27, and sub-frames 34, 35, and 36. By the main frame 27 of the frame 26 being attached to the leg portion 21, the apparatus main body 20 is fixed in the upward direction of the leg portion 21.

The main frame 27 includes a plurality of surfaces. The main frame 27 includes, for example, a front surface 28, a rear surface 29, an upper surface 30, a lower surface 31, a right side surface 32, and a left side surface 33. The front surface 28 is a surface facing in the forward direction of the printing apparatus 11. The rear surface 29 is a surface facing in the rearward direction of the printing apparatus 11. The upper surface 30 is a surface facing in the upward direction of the printing apparatus 11. The lower surface 31 is a surface facing in the downward direction of the printing apparatus 11. The right side surface 32 is a surface facing in the -X direction. The left side surface 33 is a surface facing in the +X direction.

The sub-frame 34 is attached to the main frame 27. In an example, the sub-frame 34 is attached to the upper surface 30 of the main frame 27. The sub-frame 34 supports, for example, a feeding unit 71 described later.

The sub-frame 35 is attached to the main frame 27. In an example, the sub-frame 35 is attached to the right side surface 32 of the main frame 27. The sub-frame 35 is arranged with the main frame 27 in the -X direction. The sub-frame 35 houses a waste liquid tank T1. The waste liquid tank T1 is coupled to the maintenance unit 65. The waste liquid tank T1 stores ink received by the maintenance unit 65. The waste liquid tank T1 is replaceable for the sub-frame 35.

The sub-frame 36 is attached to the main frame 27. In an example, the sub-frame 36 is attached to the left side surface 33 of the main frame 27. The sub-frame 36 is arranged with the main frame 27 in the +X direction. The sub-frame 36 is a frame that ensures the cleaning position P2. The cleaning position P2 is in the upward direction of the sub-frame 36.

The printing apparatus 11 includes the feeding unit 71. The feeding unit 71 is configured to feed out the medium P. Specifically, the feeding unit 71 feeds out the medium P before printing. The medium P before printing includes the fabric F attached to the adhesive sheet AS. In addition, the feeding unit 71 feeds out the adhesive sheet AS in which the protective sheet SS is provided at the adhesive layer described below. The feeding unit 71 is provided at the upper surface 23 at a position closer to the rear surface 25 in the -Y direction than a center of the upper surface 23. The feeding unit 71 is attached to the sub-frame 34, for example.

The feeding unit 71 includes feeding units 71R and 71L each having a first shaft 72 and a shaft holding portion 75, at an interval in the X-axis direction. The first shaft 72 of the feeding unit 71R is inserted into and fixed to a core tube CT of a roll body R1 around which the medium P is wound, from the -X direction of the core tube CT, for example. The first shaft 72 of the feeding unit 71L is inserted into and fixed to the core tube CT of the roll body R1 around which the medium P is wound from the +X direction of the core tube CT, for example.

The shaft holding portions 75 of the feeding units 71R and 71L rotatably support the pair of first shafts 72 fixed to the roll body R1, respectively, to support the roll body R1 so as to be rotatable about an axial center along the X-axis direction. As the first shaft 72 rotates, the medium P or the adhesive sheet AS is fed out from the roll body R1. In other words, when the first shaft 72 rotates, the medium P or the adhesive sheet AS wound in a roll shape around the first shaft 72 is fed out.

As illustrated in FIGS. 1 to 4, the first shaft 72 includes an insertion portion 73, a flange 74, and a coupling hole 73h. The insertion portion 73 is a portion to be inserted into the core tube CT of the roll body R1, and has a columnar shape. The flange 74 continues in a direction in which the insertion portion 73 extends, and has a larger diameter than that of the insertion portion 73. The flange 74 is supported by the shaft holding portion 75 so as to be rotatable about an axial center of the first shaft 72, thus the first shaft 72 is rotatably supported by the shaft holding portion 75.

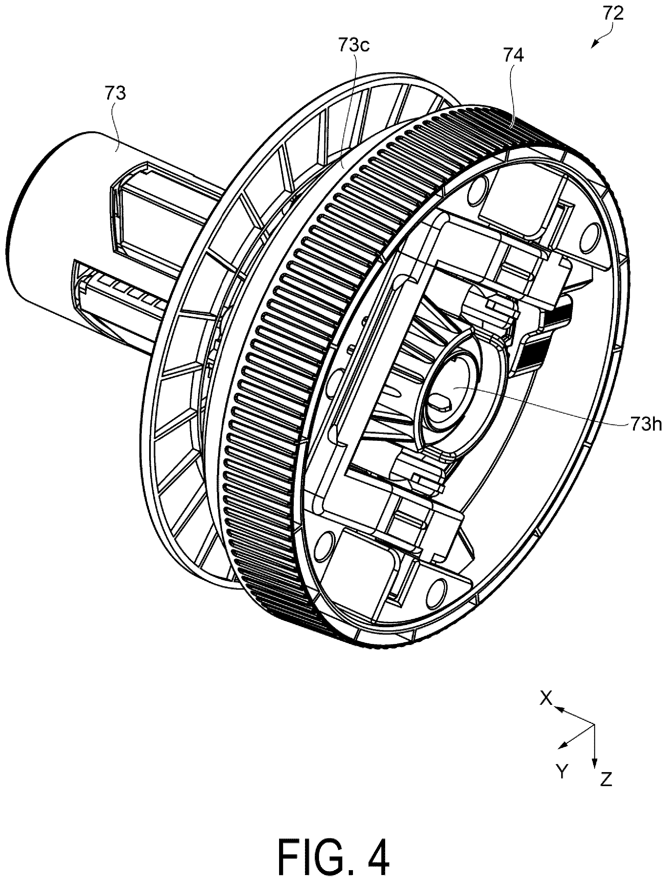

As illustrated in FIG. 4, an intermediate portion 73c having a smaller diameter than an outer shape of the flange 74 is provided at a center position of the flange 74 in the direction in which the insertion portion 73 extends. The coupling hole 73h that opens in the -X direction in FIG. 4 is provided on a side where the flange 74 is provided in the direction in which the insertion portion 73 extends. When a tip end of a coupling shaft 91 of a driving mechanism 90 described below is inserted into the coupling hole 73h, the first shaft 72 and the coupling shaft 91 are coupled to each other, and are integrally rotatable.

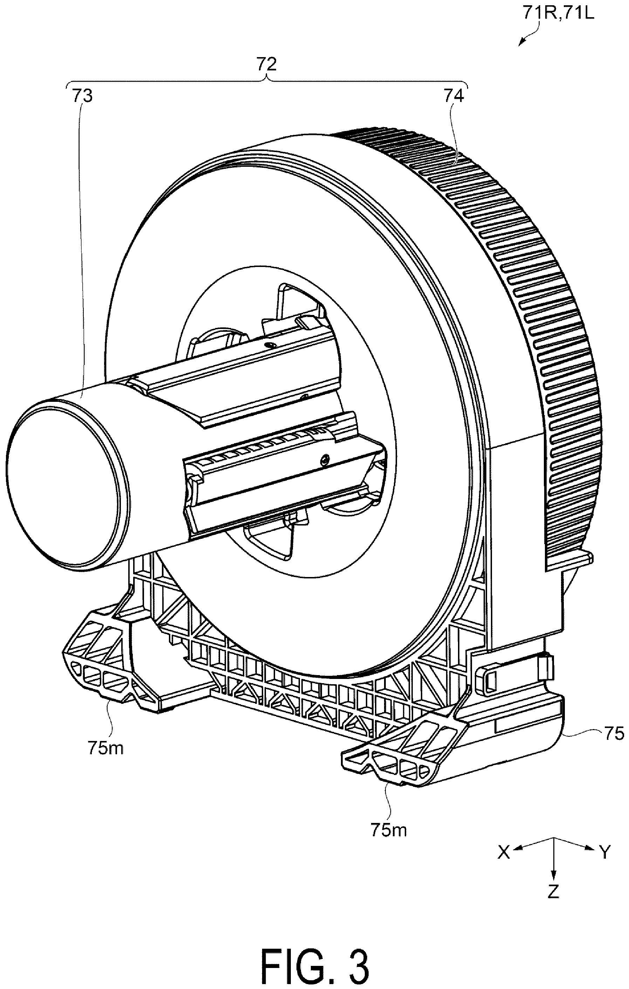

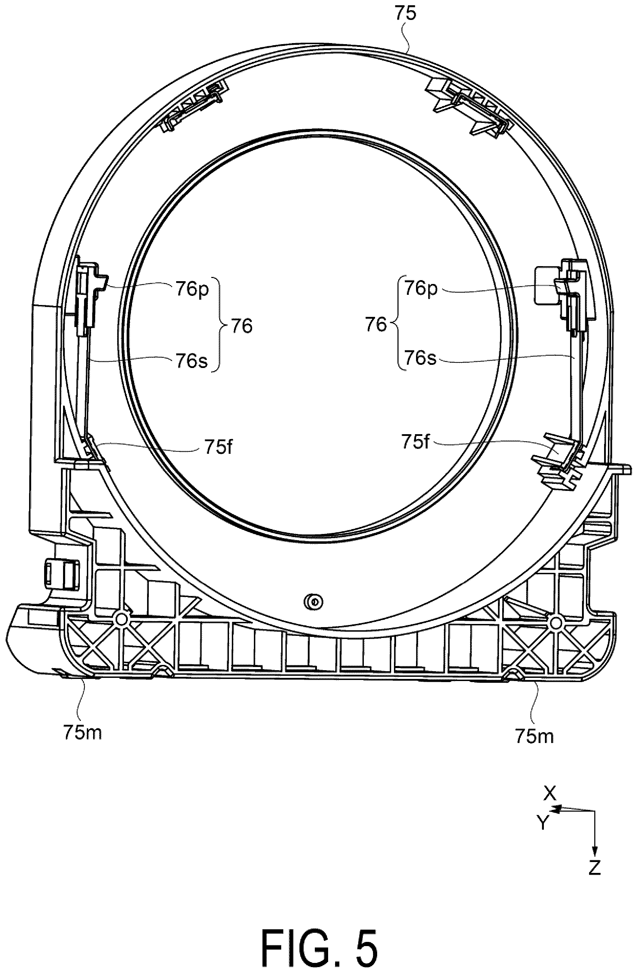

As illustrated in FIGS. 3 and 5, the shaft holding portion 75 includes an attachment portion 75m and a fixing portion 75f. The shaft holding portion 75 is provided at the upper surface 23 of the apparatus main body 20, by the attachment portion 75m being attached to the sub-frame 34. Note that the shaft holding portions 75 can be attached to the sub-frame 34 such that a distance between the pair of shaft holding portions 75 in the X-axis direction can be changed.

In the present embodiment, of the pair of shaft holding portions 75, the shaft holding portion 75 on the -X direction side is fixed at a position illustrated in FIG. 2. Then, of the pair of shaft holding portions 75, the shaft holding portion 75 on the +X direction side is attached so as to be movable in the X-axis direction, so that the interval between the pair of shaft holding portions 75 in the X-axis direction is changed. Additionally, in this way, an interval between the flanges 74 of the pair of first shafts 72 in the X-axis direction is changed. Then, in this way, in the feeding unit 71, the core tubes CT and the roll bodies R1 having different dimensions in the X-axis direction can be supported between the flanges 74 of the pair of first shafts 72.

As illustrated in FIG. 5, the shaft holding portion 75 is provided with a pair of biasing portions 76. The biasing portion 76 includes a leaf spring 76s having an end on one side fixed to the fixing portion 75f of the shaft holding portion 75, and a contact body 76p provided at an end on another side of the leaf spring 76s. The pair of contact bodies 76p are provided at positions in contact with a peripheral surface of the intermediate portion 73c of the first shaft 72.

When the contact body 76p is in contact with the peripheral surface of the intermediate portion 73c, the leaf spring 76s is elastically deformed, so that force that presses the peripheral surface of the intermediate portion 73c toward a center of rotation of the first shaft 72 acts. Accordingly, for example, when the medium P is pulled out from the feeding unit 71, the first shaft 72 and the roll body R1 supported by the first shaft 72 are rotated by inertia force, and the medium P is prevented from being excessively fed out. Additionally, accordingly, tension acts on the medium P or the adhesive sheet AS which is pulled out from the feeding unit 71.

As illustrated in FIG. 1, a transport path TR along which the medium P fed out from the feeding unit 71 is transported is provided at the printing apparatus 11. The printing apparatus 11 includes a medium support portion 43 constituting the transport path TR. The medium support portion 43 supports the medium P. The medium support portion 43 supports the medium P on which printing is performed by the printing unit 12 at a position facing the nozzle surface 15. Specifically, the medium support portion 43 supports a portion of the medium P to be subjected to printing by the printing unit 12. The medium support portion 43 is attached to the upper surface 30 of the main frame 27, for example. The medium support portion 43 is located in the upward direction of the main frame 27.

The printing apparatus 11 includes a sending unit 41. The sending unit 41 is configured to transport the medium P. The sending unit 41 transports the medium P along the transport path TR. The sending unit 41 transports the medium P located on the medium support portion 43 in the +Y direction, that is, downstream in the transport direction. The sending unit 41 transports the medium P on which printing is performed by the printing unit 12 to the downward direction, that is, downstream in the transport direction. The sending unit 41 transports the medium P such that the medium P passes through an upper side and a front side of the main frame 27.

The sending unit 41 includes a transport roller pair 42 and a transport roller 45. The transport roller pair 42 is rotated by a transport motor (not illustrated) being driven. The transport roller pair 42 transports the medium P downstream in the transport direction by rotating in a state of sandwiching the medium P. The roller pair 45 is rotatably provided at the transport path TR. The transport roller 45 guides the medium P along the transport path TR. As the transport roller 45 rotates, the medium P is smoothly transported downstream in the transport direction.

The printing apparatus 11 includes a winding unit 46. The winding unit 46 is configured to wind the medium P. The winding unit 46 is attached to an end of the leg portion 21 in the +Y direction, for example. The winding unit 46 includes a winding shaft 47. The winding shaft 47 is inserted into and fixed to the core tube CT around which the medium P is wound. The winding shaft 47 rotates by a winding motor (not illustrated) being driven. When the core tube CT fixed to the winding shaft 47 rotates, the medium P is wound around the core tube CT to form a roll body R2 in a roll shape.

The winding unit 46 winds the medium P after printing, for example. Further, for example, the winding unit 46 winds the medium P heated by the heating unit 51 described later. In addition, for example, the winding unit 46 winds the fabric F attached to the adhesive sheet AS described later. When the winding unit 46 winds the medium P, the medium P is transported downstream in the transport direction. In other words, the winding unit 46 is an example of a transport unit FP that transports the medium P.

The printing apparatus 11 includes the heating unit 51. The heating unit 51 is configured to heat the medium P onto which ink is ejected. The heating unit 51 heats the medium P to dry the medium P. When the medium P is dried, an image printed on the medium P is fixed. The heating unit 51 heats the medium P transported by the sending unit 41. Specifically, the heating unit 51 heats a portion of the medium P that has been subjected to printing of the printing unit 12 but is before wound by the winding unit 46.

The heating unit 51 is attached to the main frame 27. The heating unit 51 is located in the forward direction of the main frame 27. Specifically, the heating unit 51 faces the front surface 28 of the main frame 27. The heating unit 51 heats the medium P that passes between the heating unit 51 and the main frame 27. That is, in an example, the heating unit 51 heats a portion of the medium P that is transported in the downward direction. The heating unit 51 is located to overlap the exterior member 22 as viewed in a vertical direction. In an example, a portion of the heating unit 51 overlaps the exterior member 22 as viewed in the vertical direction.

The heating unit 51 includes a heat source 52. The heat source 52 is configured to generate heat. The heat source 52 faces a surface of the medium P onto which ink is ejected. Thus, the heat source 52 heats the surface of the medium P on which the ink is ejected. In an example, the heat source 52 heats the medium P by radiant heat. The heat source 52 is an infrared ray heater, for example. The heat source 52 emits an infrared ray toward the medium P. As the heat source 52 heats the medium P, the medium P is dried.

The heating unit 51 includes a jetting unit 53. The jetting unit 53 is a fan, for example. The jetting unit 53 is configured to jet air to the medium P. Specifically, the jetting unit 53 jets air to the surface of the medium P onto which the ink is ejected. More specifically, the jetting unit 53 jets air so as to flow in the downward direction along the medium P. Thus, the air jetted to the medium P flows in the downward direction along the surface of the medium P onto which the ink is ejected.

The heating unit 51 includes a case 54. The case 54 houses the heat source 52 and the jetting unit 53. The case 54 opens toward the medium P. That is, the case 54 opens toward the front surface 28 of the main frame 27.

In the case 54, a circulation channel 55 may be formed. The circulation channel 55 is a channel for circulating the air heated by the heat source 52. The circulation channel 55 extends to surround the heat source 52. The jetting unit 53 is located in the circulation channel 55. In the heating unit 51, the air jetted by the jetting unit 53 circulates by flowing over the medium P and through the circulation channel 55. More specifically, the air circulates as indicated with arrows in FIG. 1. In this manner, heating efficiency of the medium P is improved.

The printing apparatus 11 includes a guide bar 61. The guide bar 61 is configured to guide the medium P to the winding unit 46. The guide bar 61 is located in a vertically downward direction of the heating unit 51. The guide bar 61 includes a peripheral surface 62. The peripheral surface 62 is a surface that makes contact with the medium P. By the medium P wound around the peripheral surface 62, the guide bar 61 guides the medium P in the downward direction.

The medium P is wound around the guide bar 61 between the heating unit 51 and the winding unit 46. Thus, the medium P heated by the heating unit 51 is wound around the guide bar 61. As such, the guide bar 61 makes contact with a portion of the medium P after heated by the heating unit 51 but is before wound by the winding unit 46.

The guide bar 61 is configured to be rotatable. The guide bar 61 is configured to actively rotate with respect to the medium P. The guide bar 61 may be configured to rotate to follow the medium P. The guide bar 61 may rotate through friction with the medium P as the medium P is transported, for example. That is, the guide bar 61 may rotate through the friction with the medium P as the medium P is wound by the winding unit 46.

The printing apparatus 11 includes a driving unit 63 (not illustrated). By the driving unit 63 being driven, the guide bar 61 rotates. The driving unit 63 is a motor, for example. The driving unit 63 is attached to the main frame 27, for example.

The driving unit 63 rotates the guide bar 61 at a rotational speed such that a moving speed of the peripheral surface 62 matches a transport speed of the medium P by the sending unit 41, for example. In this manner, the friction between the medium P and the guide bar 61 is reduced. In addition, for example, the driving unit 63 may rotate the guide bar 61 such that the moving speed of the peripheral surface 62 is larger than the transport speed of the medium P by the sending unit 41.

The printing apparatus 11 includes a heat shielding member 64. The heat shielding member 64 is configured to shield the heat of the heating unit 51. Specifically, the heat shielding member 64 shields the heat applied from the heating unit 51 to the main frame 27. The heat shielding member 64 is located between the heating unit 51 and the main frame 27. The heat shielding member 64 is attached to the front surface 28 of the main frame 27. The heat shielding member 64 is located along the front surface 28. The heat shielding member 64 faces the heating unit 51. The medium P passes between the heat shielding member 64 and the heating unit 51.

As illustrated in FIG. 2, the printing apparatus 11 includes the maintenance unit 65. The maintenance unit 65 performs maintenance of the printing unit 12 located at the maintenance position P1. In an example, the maintenance unit 65 performs the maintenance of the printing unit 12 by receiving ink due to flushing, cleaning and the like from the printing unit 12.

The flushing is operation of appropriately ejecting the ink from the nozzle 14. The flushing reduces a risk of clogging of the nozzle 14. The cleaning is operation of discharging the ink from the nozzle 14. The cleaning discharges foreign matter together with the ink from the nozzle 14. The maintenance unit 65 causes the ink to be discharged from the nozzle 14 by suctioning the ink in a state of being in contact with the head 13, for example. The ink received by the maintenance unit 65 flows to the waste liquid tank T1.

As illustrated in FIG. 1, the printing apparatus 11 includes a control unit 66. The control unit 66 integrally controls the printing apparatus 11. That is, the control unit 66 controls driving of the feeding unit 71, the sending unit 41, the printing unit 12, the heating unit 51, the guide bar 61, the winding unit 46, the maintenance unit 65, and the like.

The control unit 66 is constituted by one or more processors that execute various processes in accordance with a computer program. The control unit 66 is constituted by one or more dedicated hardware circuits such as an application-specific integrated circuit that executes at least some of the various processes. The control unit 66 may be constituted by a circuit including a combination of a processor and a hardware circuit. The processor includes a CPU, and memories such as a RAM and a ROM. The memory stores program codes or commands configured to cause the CPU to execute processes. The memory, i.e., a computer readable medium, includes any type of readable mediums that are accessible by general-purpose or dedicated computers.

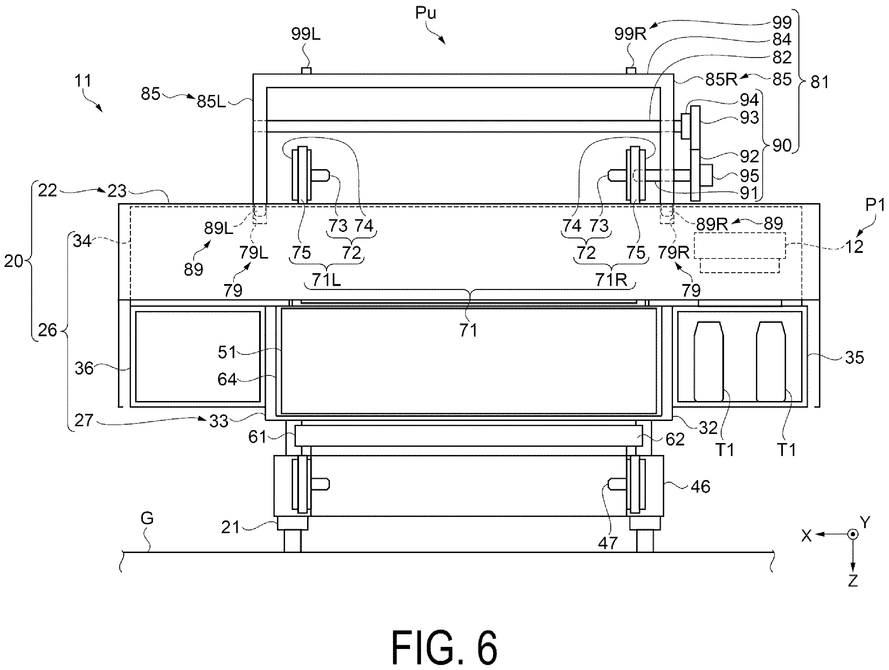

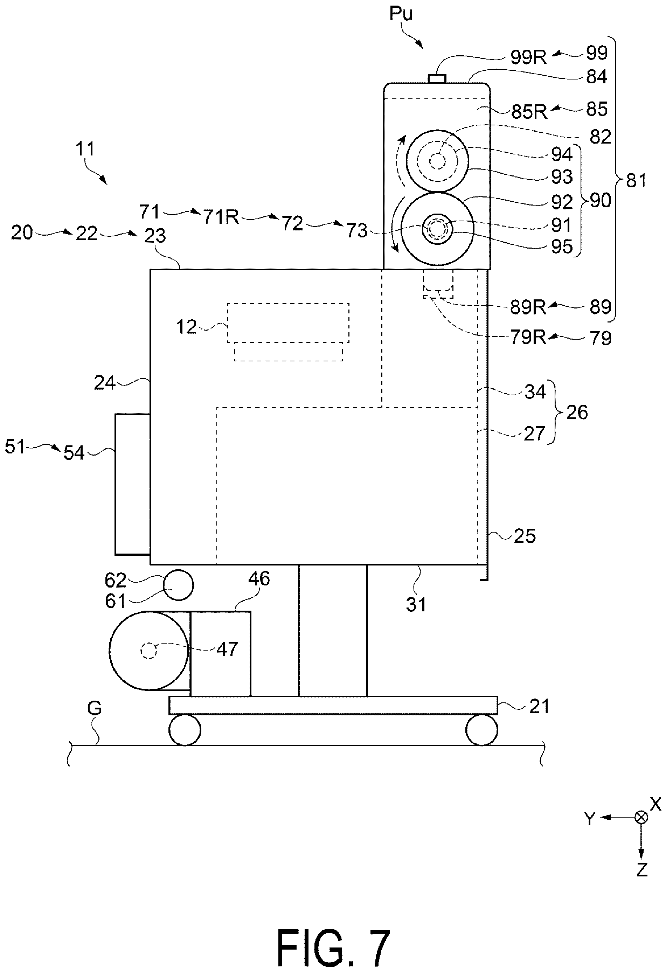

Additionally, as illustrated in FIGS. 6 and 7, the printing apparatus 11 includes a guide portion 81. The guide portion 81 is mounted to the apparatus main body 20 when the fabric F is attached to the adhesive sheet AS. The guide portion 81 is detachably provided at the apparatus main body 20. The guide portion 81 supports a second shaft 82 so as to be rotatable about an axial center along the X-axis direction. The guide portion 81 is provided at the upper surface 23 at a position closer to the rear surface 25 in the -Y direction than the center of the upper surface 23. The guide portion 81 includes a placement portion 84, a leg portion 85, and the driving mechanism 90.

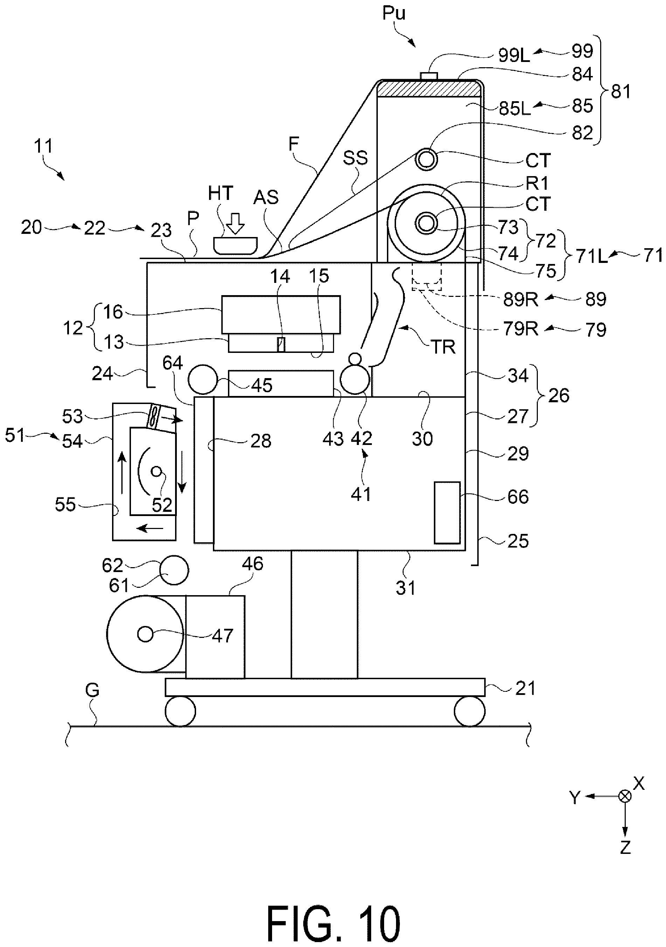

An upper surface, which is a surface in the -Z direction of the placement portion 84, extends, along the X-Y plane, in the X-axis direction. When the guide portion 81 is mounted to the apparatus main body 20, the placement portion 84 is located in the vertically upward direction of the first shaft 72 and the second shaft 82. The upper surface of the placement portion 84 is provided such that the fabric F can be placed thereon when the fabric F is attached to the adhesive sheet AS (see FIG. 10).

When the fabric F is attached to the adhesive sheet AS, the fabric F placed on the placement portion 84 passes through an upper position Pu and moves toward a region of the upper surface 23 in the +Y direction of the placement portion 84. The upper position Pu is a position which is in the vertically upward direction of the first shaft 72 and the second shaft 82. The placement portion 84 is an example of a contact portion CP that causes the fabric F to pass through the upper position Pu by coming into contact with the fabric F.

A position guide portion 99 that guides a position of the fabric F in the X-axis direction is provided at the upper surface of the placement portion 84. In other words, the guide portion 81 includes the position guide portion 99 at the upper position Pu. The X-axis direction is an example of a width direction of the fabric F intersecting a direction in which the fabric F faces the upper surface 23. The position guide portions 99 include a position guide portion 99R that guides a position of an end of the fabric F in the -X direction, and a position guide portion 99L that guides a position of an end of the fabric F in the +X direction.

The position guide portion 99R of the present embodiment is a protrusion that can adjust a position of a side surface in the +X direction in the X-axis direction so as to correspond to a position of the flange 74 of the feeding unit 71R. Accordingly, the position guide portion 99R can regulate the position of the end of the fabric F in the -X direction to be the same position as an end of the roll body R1 in the -X direction supported by the feeding unit 71.

Further, the position guide portion 99L of the present embodiment is a protrusion that can adjust a position of a side surface in the -X direction in the X-axis direction so as to correspond to a position of the flange 74 of the feeding unit 71L. Accordingly, the position guide portion 99L can regulate the position of the end of the fabric F in the +X direction to be the same position as an end of the roll body R1 in the +X direction supported by the feeding unit 71.

Note that the position guide portion 99 may be a mark such as a character symbol provided at the upper surface of the placement portion 84 so as to serve as a guide for a placement position of the fabric F when a user places the fabric F on the placement portion 84. In this case, a plurality of the marks may be provided at the upper surface of the placement portion 84 in correspondence with dimensions in the X-axis direction of the roll bodies R1 supported by the feeding unit 71.

The leg portions 85 include a leg portion 85R extending in the vertically downward direction from an end of the placement portion 84 in the -X direction, and a leg portion 85L extending in the vertically downward direction from an end of the placement portion 84 in the +X direction. The leg portions 85 support the second shaft 82 at a position in the vertically downward direction of the placement portion 84 so as to be rotatable about the axial center of the second shaft 82 along the X-axis direction. The leg portion 85R supports the second shaft 82 near an end in the -X direction. The leg portion 85L supports an end of the second shaft 82 in the +X direction.

The leg portion 85 is provided with an engaging portion 89 engageable with an engaged portion 79 provided at the apparatus main body 20. The engaged portions 79 include engaged portions 79R and 79L. The engaged portion 79R is provided at a position on the upper surface 23 side of the apparatus main body 20 and on the -X direction side of the feeding unit 71R. The engaged portion 79L is provided at a position on the upper surface 23 side of the apparatus main body 20 and on the +X direction side of the feeding unit 71L. The engaged portions 79R and 79L are recesses that open in the -Z direction.

The engaging portions 89 include engaging portions 89R and 89L. The engaging portion 89R is provided at an end of the leg portion 85R in the +Z direction. The engaging portion 89R is a protrusion protruding from the end of the leg portion 85R in the +Z direction so as to be engageable with the engaged portion 79R. The engaging portion 89L is provided at an end of the leg portion 85L in the +Z direction. The engaging portion 89L is a protrusion protruding from the end of the leg portion 85L in the +Z direction so as to be engageable with the engaged portion 79L.

By the engaging portions 89R and 89L engaging with the engaged portions 79R and 79L, the guide portion 81 is attached to the apparatus main body 20. The engaged portions 79R and 79L of the present embodiment are provided at the sub-frame 34, for example.

The second shaft 82 is provided so as to be mountable to the leg portions 85R and 85L at a support position illustrated in FIG. 6 from the -X direction side of the leg portion 85R. In the process of being mounted at the support position from the -X direction side of the leg portion 85R, the core tube CT is inserted into and fixed to the second shaft 82. Then, for example, when the fabric F is attached to the adhesive sheet AS, the protective sheet SS peeled off from the adhesive sheet AS fed out from the first shaft 72 of the feeding unit 71 is wound by the core tube CT fixed to the second shaft 82.

The driving mechanism 90 rotates the second shaft 82. When the second shaft 82 rotates, for example, the protective sheet SS peeled off from the adhesive sheet AS fed out from the first shaft 72 of the feeding unit 71 is wound by the core tube CT fixed to the second shaft 82. The driving mechanism 90 includes the coupling shaft 91, a first toothed gear 92, a second gear 93, and a torque limiter 94. The second toothed gear 93 is provided at an end of the second shaft 82 in the -X direction. The torque limiter 94 is provided at the second shaft 82, at a position adjacent to the second toothed gear 93 on the +X direction side.

The coupling shaft 91 is supported by the leg portion 85R of the guide portion 81 so as to be rotatable about an axial center along the X-axis direction. In addition, when the guide portion 81 is mounted to the apparatus main body 20, the coupling shaft 91 is supported by the leg portion 85R such that a tip end which is an end in the +X direction in FIG. 6 can be inserted into the coupling hole 73h (refer to FIG. 4) of the first shaft 72.

Further, the coupling shaft 91 is supported by the leg portion 85R so as to be movable to a coupling position (see FIG. 6) at which the coupling shaft 91 is coupled to the first shaft 72 by the tip end being inserted into the coupling hole 73h of the first shaft 72. In addition, the coupling shaft 91 is supported by the leg portion 85R so as to be movable to a separation position (not illustrated) at which the coupling with the first shaft 72 is released, and which is located in the -X direction of the coupling position.

The first toothed gear 92 is provided at an end of the coupling shaft 91 in the -X direction in FIG. 6. The first toothed gear 92 is provided with a grip portion 95 that is gripped by a user when the coupling shaft 91 is moved between the coupling position and the separation position. When the coupling shaft 91 is at the coupling position, the first toothed gear 92 meshes with the second toothed gear 93 provided at the end of the second shaft 82 in the -X direction. When the coupling shaft 91 is located at the separation position, the first toothed gear 92 is located on the -X direction side of the second toothed gear 93 and is separated from the second toothed gear 93.

When the coupling shaft 91 is at the coupling position, the first shaft 72 of the feeding unit 71 rotates counterclockwise when viewed from the -X direction side of the first shaft 72 as indicated by a solid arrow in FIG. 7. In this case, the coupling shaft 91 and the first toothed gear 92 rotate counterclockwise when viewed from the -X direction side of the first toothed gear 92 as indicated by the solid arrow in FIG. 7. As a result, the second toothed gear 93 and the second shaft 82 rotate clockwise when viewed from the -X direction side of the second shaft 82, as indicated by a dashed arrow in FIG. 7. In other words, when the first toothed gear 92 and the second toothed gear 93 mesh with each other, the first shaft 72 and the second shaft 82 rotate in conjunction with each other.

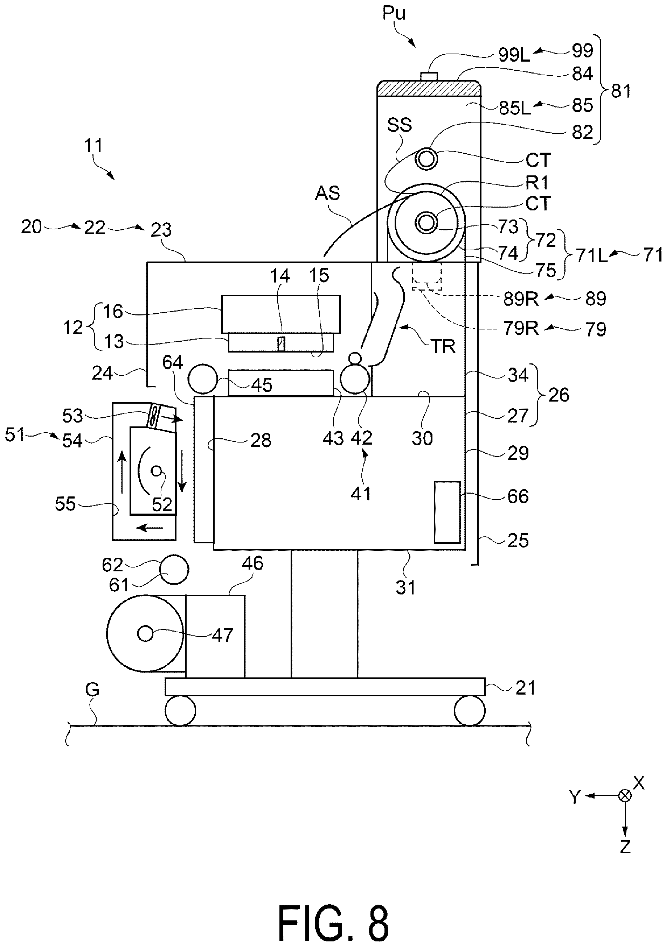

For example, it is assumed that a user performs a process of attaching the fabric F to the adhesive sheet AS. In this case, first, the user attaches the guide portion 81 to the apparatus main body 20. Then, in a state where the coupling shaft 91 is at the separation position, the user fixes the core tube CT around which the adhesive sheet AS is wound to the first shaft 72 of the feeding unit 71 as illustrated in FIG. 8. The adhesive sheet AS and the protective sheet SS provided at the adhesive layer of the adhesive sheet AS are wound around the core tube CT in a direction such that the adhesive layer is on an outer side of the base material of the adhesive sheet AS.

Then, the user fixes the core tube CT around which the adhesive sheet AS is wound to the first shaft 72. At this time, the core tube CT is fixed to the first shaft 72 in a direction such that when the adhesive sheet AS is CT is pulled out in the +Y direction from the feeding unit 71, the first shaft 72 rotates counterclockwise when the first shaft 72 is viewed from the -X direction side. Then, the user fixes an end of the protective sheet SS peeled off from the adhesive sheet AS to the core tube CT fixed to the second shaft 82. Then, the user moves the coupling shaft 91 to the coupling position.

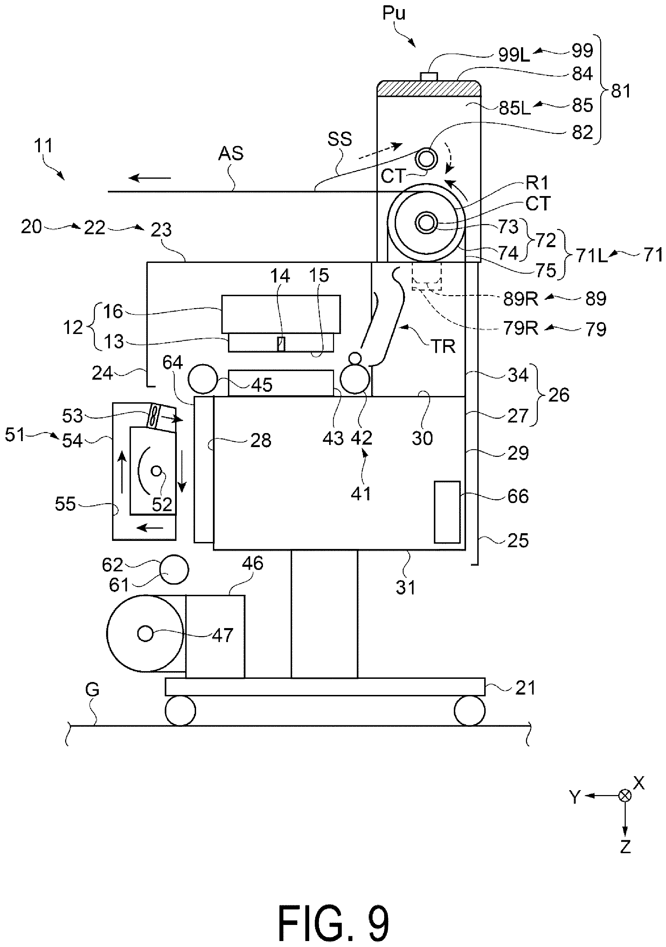

Then, as illustrated in FIG. 9, when the user pulls out the adhesive sheet AS from the feeding unit 71 in the +Y direction, the first shaft 72 rotates counterclockwise when viewed from the -X direction side of the first shaft 72. Accordingly, the coupling shaft 91, the first toothed gear 92, and the second toothed gear 93 constituting the driving mechanism 90 rotate, and thus the second shaft 82 rotates clockwise when viewed from the -X direction side of the second shaft 82. Then, when the second shaft 82 rotates, the protective sheet SS peeled off from the adhesive sheet AS is wound by the core tube CT fixed to the second shaft 82.

When the adhesive sheet AS is fed out from the feeding unit 71, the protective sheet SS is peeled off from the adhesive sheet AS. At this time, a wound amount of the protective sheet SS wound by one rotation of the second shaft 82 may be smaller than a peeled amount of the protective sheet SS peeled off from the adhesive sheet AS by one rotation of the first shaft 72. In this case, there is a risk that the protective sheet SS peeled off from the adhesive sheet AS is loosened and retained between the adhesive sheet AS fed out from the feeding unit 71 and the protective sheet SS wound around the core tube CT of the second shaft 82.

Accordingly, in the present embodiment, the number of teeth of the first toothed gear 92 is set to be larger than the number of teeth of the second toothed gear 93. This makes it difficult for the wound amount of the protective sheet SS wound by one rotation of the second shaft 82 to become smaller than the peeled amount of the protective sheet SS peeled off from the adhesive sheet AS fed out by one rotation of the first shaft 72.

In addition, the wound amount of the protective sheet SS wound by one rotation of the second shaft 82 may be larger than the peeled amount of the protective sheet SS peeled off from the adhesive sheet AS by one rotation of the first shaft 72. In this case, the protective sheet SS peeled off from the adhesive sheet AS stretches between the adhesive sheet AS wound around the core tube CT of the first shaft 72 and the protective sheet SS wound around the core tube CT of the second shaft 82. Then, there is a risk that tension larger than expected acts on the protective sheet SS peeled off from the adhesive sheet AS.

Accordingly, the driving mechanism 90 of the present embodiment is provided with the torque limiter 94 that limits rotational torque transmitted from the second toothed gear 93 to the second shaft 82 in accordance with rotation of the second toothed gear 93. The torque limiter 94 is provided between the second toothed gear 93 and the second shaft 82, and couples the second toothed gear 93 and the second shaft 82. When rotational torque transmitted from the second toothed gear 93 to the torque limiter 94 becomes equal to or greater than a set value in association with the rotation of the second toothed gear 93, the torque limiter 94 releases the coupling between the second toothed gear 93 and the second shaft 82.

Thus, the rotational torque transmitted from the second toothed gear 93 to the second shaft 82 is adjusted to be smaller than the set value in accordance with the rotation of the second toothed gear 93. Then, any of the protective sheet SS, the guide portion 81, and the feeding unit 71 is prevented from being damaged by the tension acting on the protective sheet SS peeled off from the adhesive sheet AS. As the torque limiter 94, a mechanical torque limiter of a friction type, a shear pin type, a ball type, a magnet type, or the like, a tolerance ring as a slip clutch, or the like can be employed.

As illustrated in FIG. 10, the adhesive sheet AS pulled out from the feeding unit 71 is supported by a region of the upper surface 23 in the +Y direction of the placement portion 84. The upper surface 23 is an example of a support portion SP that supports the adhesive sheet AS from which the protective sheet SS is peeled off and the adhesive layer is exposed. Then, the user places the fabric F on the adhesive sheet AS supported by the upper surface 23 through the upper position Pu.

Then, by using a pressing member HT or the like, the user presses the fabric F from the -Z direction side of the fabric F toward the adhesive sheet AS supported by the upper surface 23 as indicated by an outline arrow. As a result, the fabric F of the attachment specification that is the fabric F to which the adhesive sheet AS is attached is produced.

Note that in the present embodiment, the second shaft 82 is located between the first shaft 72 of the feeding unit 71 and the placement portion 84 in the Z-axis direction. For example, in the Y-axis direction, a region between a region of the upper surface 23 in which the fabric F is placed on the adhesive sheet AS and a region in which the fabric F is placed on the placement portion 84 is a pull-out region. In this case, the protective sheet SS peeled off from the adhesive sheet AS is located between the fabric F and the adhesive sheet AS in the pull-out region. Therefore, in the pull-out region, the fabric F is prevented from coming into contact with the adhesive sheet AS from which the adhesive layer is exposed.

When printing is performed on the fabric F of the attachment specification, the user removes the guide portion 81 from the apparatus main body 20. In addition, the user removes the core tube CT around which the adhesive sheet AS is wound from the feeding unit 71. Then, the user attaches the core tube CT around which the fabric F of the attachment specification is wound to the first shaft 72 of the feeding unit 71.

Then, the user operates an instruction unit (not illustrated), to instruct printing on the medium P to the printing apparatus 11. In this manner, the control unit 66 controls driving of the sending unit 41, the printing unit 12, the heating unit 51, the guide bar 61, the winding unit 46, and the like, and thus printing is performed on the medium P in a bonding mode by the printing unit 12.

Note that in the printing apparatus 11 of the present embodiment, it is possible to use the winding unit 46 when the produced fabric F of the attachment specification is wound around the core tube CT. In this case, the core tube CT around which the fabric F of the attachment specification is wound is produced by winding the fabric F of the attachment specification around the core tube CT fixed to the winding shaft 47.

In this case, the fabric F of the attachment specification is transported from the upper surface 23 toward the winding unit 46 by the winding unit 46 winding the fabric F of the attachment specification. Thus, the winding unit 46 is an example of the transport unit FP that transports the fabric F of the attachment specification.

As described above, the printing apparatus 11 according to Embodiment 1 can provide the following advantages.

The printing apparatus 11 includes the first shaft 72 around which the adhesive sheet AS is wound that includes the base material and the adhesive layer formed at the base material and in which the protective sheet SS provided at the adhesive layer. Further, the printing apparatus 11 includes the second shaft 82 around which the protective sheet SS is wound that is peeled off from the adhesive sheet AS fed out from the first shaft 72. Further, the printing apparatus 11 includes the driving mechanism 90 that rotates the second shaft 82. In addition, the printing apparatus 11 includes the upper surface 23 that supports the adhesive sheet AS from which the protective sheet SS is peeled off and the adhesive layer is exposed. Further, the printing apparatus 11 includes the guide portion 81 that causes the fabric F to pass through the upper position Pu that is in the vertically upward direction of the first shaft 72 and the second shaft 82, and guides the fabric F toward the upper surface 23. Then, the printing apparatus 11 includes the printing unit 12 capable of performing printing on the fabric F attached to the adhesive sheet AS at the upper surface 23.

According to this, the protective sheet SS peeled off from the adhesive sheet AS is collected by the second shaft 82, and thus it is possible to suppress a decrease in workability for a user in the process of attaching the fabric F to the adhesive sheet AS. In addition, the fabric F is unlikely to come into contact with the adhesive sheet AS in which the adhesive layer is exposed due to own weight thereof, and thus it is possible to suppress a decrease in workability for a user in the process of attaching the fabric F to the adhesive sheet AS.

The driving mechanism 90 includes the first toothed gear 92 that rotates together with the first shaft 72, and the second toothed gear 93 that rotates together with the second shaft 82. Then, when the first toothed gear 92 and the second toothed gear 93 mesh with each other, the first shaft 72 and the second shaft 82 rotate in conjunction with each other. According to this, the driving mechanism 90 that rotates the second shaft 82 can be achieved by using the rotation of the first shaft 72.

The number of teeth of the first toothed gear 92 is larger than the number of teeth of the second toothed gear 93, and the driving mechanism 90 includes the torque limiter 94 that limits the rotational torque transmitted from the second toothed gear 93 to the second shaft 82 in accordance with the rotation of the second toothed gear 93. According to this, it is possible to wind the protective sheet SS peeled off from the adhesive sheet AS around the second shaft 82 with a good degree.

The printing apparatus 11 includes the biasing portion 76 that applies force toward the center of rotation of the first shaft 72 by coming into contact with the first shaft 72. According to this, it is possible to suppress occurrence of sagging of the adhesive sheet AS when the adhesive sheet AS is excessively pulled from the first shaft 72.

The printing apparatus 11 includes the winding unit 46 that transports the fabric F attached to the adhesive sheet AS. This eliminates the need of a work for a user to move the fabric F attached to the adhesive sheet AS.

The guide portion 81 rotatably supports the second shaft 82, includes the driving mechanism 90, and is detachably provided at the apparatus main body 20 including the upper surface 23. According to this, when the process of attaching the fabric F to the adhesive sheet AS is not performed, the guide portion 81 can be removed from the apparatus main body 20. Therefore, when the process of attaching the fabric F to the adhesive sheet AS is not performed, a user can effectively use the upper surface 23.

The guide portion 81 includes the placement portion 84 that causes the fabric F to pass through the upper position Pu by coming into contact with the fabric F, and the leg portion 85 that extends in the vertically downward direction from the placement portion 84 and rotatably supports the second shaft 82. Then, the leg portion 85 includes the engaging portion 89 that can engage with the engaged portion 79 provided at the upper surface 23. According to this, the guide portion 81 can be easily attached to and detached from the upper surface 23 of the apparatus main body 20.

The guide portion 81 includes the position guide portion 99 that guides the position of the fabric F in the X-axis direction at the upper position Pu. According to this, the fabric F can be attached to the adhesive sheet AS with high positional accuracy.

### 2. Embodiment 2

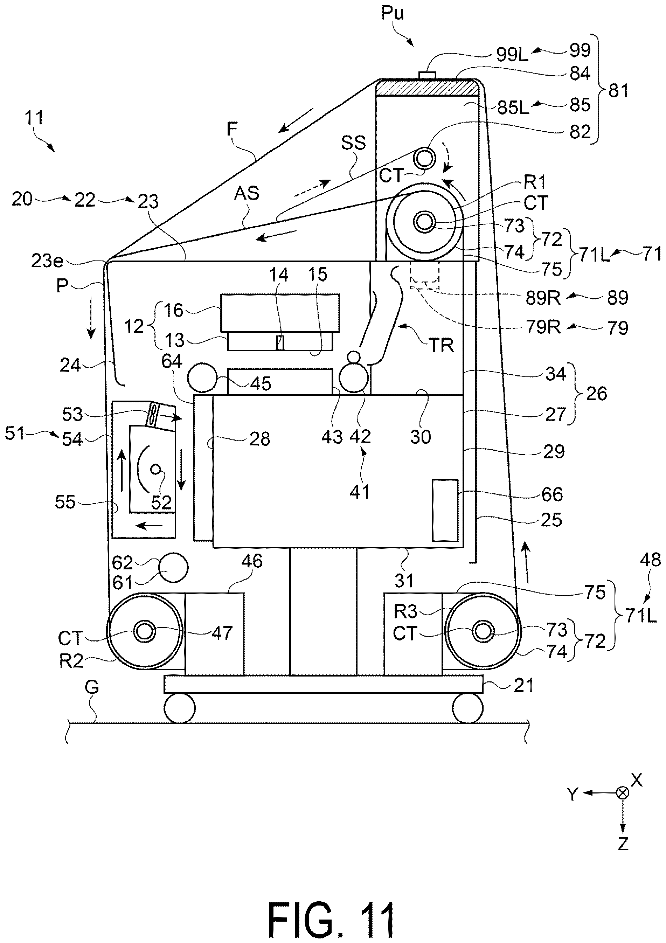

As illustrated in FIG. 11, the printing apparatus 11 according to Embodiment 2 further includes a supply unit 48 capable of feeding out the fabric F at the leg portion 21 in Embodiment 1 described above. In addition, an end portion 23e which is an end of the upper surface 23 in the +Y direction in the printing apparatus 11 according to Embodiment 2 is located on the +Y direction side with respect to a front surface which is an outer surface of the heating unit 51 in the +Y direction.

Other configurations of the printing apparatus 11 according to Embodiment 2 are the same as those of the printing apparatus 11 according to Embodiment 1. Note that the same reference signs are used for the same components as those in Embodiment 1, and a redundant description thereof will be omitted.

In the present embodiment, the supply unit 48 is attached to a position on the -Y direction side from a center of the leg portion 21. The supply unit 48 is provided at a position in the +Z direction with respect to the placement portion 84 of the guide portion 81 mounted to the apparatus main body 20. Further, the supply unit 48 is provided at a position in the +Z direction with respect to the upper surface 23. In addition, the supply unit 48 is provided at a position in the -Y direction with respect to the end portion 23e which is an end of the upper surface 23 in the +Y direction.

The supply unit 48 has the same configuration as that of the feeding unit 71. Thus, the first shaft 72 of the supply unit 48 is inserted into and fixed to the core tube CT of a roll body R3 around which the fabric F is wound. Then, when the first shaft 72 of the supply unit 48 rotates, the fabric F is fed out from the supply unit 48. In addition, in this case, the shaft holding portion 75 of the supply unit 48 is provided with the pair of biasing portions 76. Therefore, when the fabric F is pulled out from the supply unit 48, tension acts on the fabric F.

When the fabric F of the attachment specification that is the fabric F attached to the adhesive sheet AS is produced, a user places the fabric F on the adhesive sheet AS supported by the upper surface 23 through the upper position Pu as in the case of Embodiment 1. Then, the user pulls the adhesive sheet AS at which the fabric F is overlaid in a direction that is the +Z direction from the upper surface 23. At this time, since tension acts on the fabric F, the fabric F is pressed against the adhesive sheet AS passing through the end portion 23e of the upper surface 23. As a result, the fabric F is attached to the adhesive sheet AS.

Then, when the fabric F is attached to the adhesive sheet AS and the fabric F of the attachment specification is wound around the core tube CT, the fabric F of the attachment specification may be wound around the core tube CT fixed to the winding shaft 47 of the winding unit 46. Then, the fabric F is pressed against the adhesive sheet AS passing through the end portion 23e of the upper surface 23 by the winding unit 46 winding the fabric F of the attachment specification around the winding shaft 47. As a result, the fabric F is attached to the adhesive sheet AS.

In this case, the winding unit 46 can be said to be an example of a pressing unit PP that presses the fabric F against the adhesive sheet AS supported by the end portion 23e of the upper surface 23. As described above, the printing apparatus 11 according to Embodiment 2 can provide the following advantages.

The printing apparatus 11 includes the winding unit 46 that presses the fabric F against the adhesive sheet AS supported by the upper surface 23. This eliminates the need of a work for a user to press the fabric F against the adhesive sheet AS.

### 3. Embodiment 3

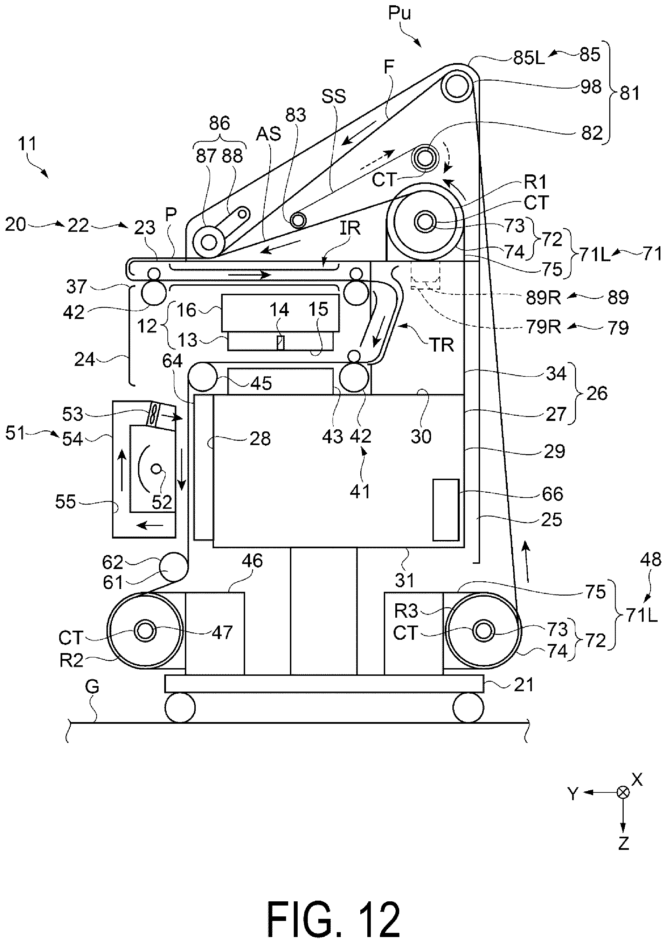

As illustrated in FIG. 12, the printing apparatus 11 according to Embodiment 3 further includes the supply unit 48 capable of feeding out the fabric F, similarly to Embodiment 2 described above. In addition, the printing apparatus 11 according to Embodiment 3 includes a guide roller 98 instead of the placement portion 84 of the guide portion 81 in Embodiment 1 described above. In addition, the printing apparatus 11 according to Embodiment 3 further includes a pressing mechanism 86 including a pressing roller 87 and a moving unit 88, and a collecting roller 83, at the guide portion 81 in Embodiment 1 described above. In addition, in the printing apparatus 11 according to Embodiment 3, an introduction path IR including an introduction port 37 is further included at the apparatus main body 20 in Embodiment 1 described above.

Other configurations of the printing apparatus 11 according to Embodiment 3 are the same as those of the printing apparatus 11 according to Embodiment 1. Note that the same reference signs are used for the same components as those in Embodiment 1 and Embodiment 2, and a redundant description thereof will be omitted.

The guide roller 98 is provided at a position between the leg portions 85R and 85L in the X-axis direction. The guide roller 98 is a cylindrical roller supported by the leg portions 85R and 85L so as to be rotatable about an axis along the X-axis. A peripheral surface of the guide roller 98 extends in the X-axis direction. When the guide portion 81 is mounted to the apparatus main body 20, the guide roller 98 is located in the -Z direction of the first shaft 72 and the second shaft 82. The peripheral surface of the guide roller 98 is provided so as to be able to guide the fabric F, by coming into contact with the fabric F when the fabric F is attached to the adhesive sheet AS.

When the fabric F is attached to the adhesive sheet AS, the fabric F guided by the guide roller 98 passes through the upper position Pu, and moves toward a region of the upper surface 23 in the +Y direction of the guide roller 98. The guide roller 98 is an example of the contact portion CP that causes the fabric F to pass through the upper position Pu by coming into contact with the fabric F.

The pressing roller 87 is provided at a position between the leg portions 85R and 85L in the X-axis direction. The pressing roller 87 is a cylindrical roller supported by the moving unit 88 so as to be rotatable about an axis along the X-axis. The moving units 88 are provided at the leg portions 85R and 85L so as to be able to move the pressing roller 87 between a pressing position and a standby position.

The pressing position is a position at which the pressing roller 87 can press the fabric F against the adhesive sheet AS supported by the upper surface 23 in the region of the upper surface 23 in the +Y direction of the guide roller 98. Thus, the pressing roller 87 is an example of the pressing unit PP that presses the fabric F against the adhesive sheet AS supported by the upper surface 23. The standby position is a position away from the pressing position in the -Z direction, and a gap is formed between the adhesive sheet AS supported by the upper surface 23 and the pressing roller 87.

The movement of the pressing roller 87 between the pressing position and the standby position may be performed by a manual operation by a user, or may be performed by driving of a pressing motor included in the pressing mechanism 86. When the pressing mechanism 86 includes the pressing motor, driving of the pressing motor is controlled by the control unit 66.

The collecting roller 83 is provided at a position between the leg portions 85R and 85L in the X-axis direction. The collecting roller 83 is a cylindrical roller supported by the leg portions 85R and 85L so as to be rotatable about an axis along the X-axis. The collecting roller 83 extends in the X-axis direction. When the guide portion 81 is mounted to the apparatus main body 20, the collecting roller 83 is located between the first shaft 72 and the pressing roller 87 in the Y-axis direction. Further, the collecting roller 83 is located between the second shaft 82 and the pressing roller 87 in the Z-axis direction.

In the process of attaching the fabric F to the adhesive sheet AS, the protective sheet SS peeled off from the adhesive sheet AS is wound by the collecting roller 83 and then wound by the second shaft 82. Thus, the protective sheet SS is stably wound by the second shaft 82. Also in the present embodiment, the protective sheet SS peeled off from the adhesive sheet AS is located between the fabric F and the adhesive sheet AS in the pull-out region, as in Embodiment 1. Furthermore, between the first shaft 72 and the pressing roller 87, the collecting roller 83 is located closer to the pressing roller 87. Therefore, in the pull-out region, the fabric F is further prevented from coming into contact with the adhesive sheet AS in which the adhesive layer is exposed.

The introduction path IR is provided at the apparatus main body 20 so that the medium P can be introduced into a middle of the transport path TR. For example, the introduction path IR introduces the fabric F of the attachment specification to be produced at the upper surface 23 to a position on the transport path TR upstream of the medium support portion 43 in the transport direction via the introduction port 37. The introduction port 37 is provided at the front surface 24 of the apparatus main body 20 and opens facing in the +Y direction.

The introduction path IR is provided with the transport roller pair 42, that transports the fabric F of the attachment specification entering the apparatus main body 20 through the introduction port 37, downstream in the transport direction indicated by an arrow. The transport roller pair 42 provided in the introduction path IR is an example of the transport unit FP that transports the fabric F of the attachment specification.

According to the printing apparatus 11 of the present embodiment, it is possible to perform printing on the fabric F of the attachment specification by the printing unit 12, by inserting the fabric F of the attachment specification produced at the upper surface 23 into the introduction port 37.

First, in the case of producing the fabric F of the attachment specification which is the fabric F attached to the adhesive sheet AS, a user places the fabric F on the adhesive sheet AS supported by the upper surface 23 through the upper position Pu as in Embodiment 1. At this time, the fabric F fed out from the supply unit 48 passes through the -Z direction side of the guide roller 98 and the +Z direction side of the pressing roller 87 at the standby position, and is placed on the adhesive sheet AS supported by the upper surface 23.

Then, by positioning the pressing roller 87 at the pressing position, the fabric F is pressed against the adhesive sheet AS supported by the upper surface 23. In this state, by pulling out the fabric F pressed against the adhesive sheet AS, and the adhesive sheet AS in the +Y direction, the fabric F of the attachment specification which is the fabric F attached to the adhesive sheet AS is produced.

When printing is performed on the fabric F of the attachment specification, a user inserts a tip end of the fabric F of the attachment specification which is the fabric F attached to the adhesive sheet AS into the introduction port 37. Then, the user instructs the printing apparatus 11 to perform printing on the fabric F of the attachment specification by operating the instruction unit. Accordingly, the control unit 66 controls driving of the transport roller pair 42 in the introduction path IR to transport the fabric F of the attachment specification toward the transport path TR downstream in the transport direction through the introduction path IR.

Then, the control unit 66 controls driving of the sending unit 41, the printing unit 12, the heating unit 51, the guide bar 61, the winding unit 46, and the like on the transport path TR, and thus printing on the medium P in the bonding mode by the printing unit 12 is performed. In addition, by the above-described control by the control unit 66, the medium P in the bonding mode on which printing is performed by the printing unit 12 is wound by the core tube CT fixed to the winding shaft 47.

As described above, the printing apparatus 1 according to Embodiment 3 can provide the following advantages.

The printing apparatus 11 includes the pressing roller 87 that presses the fabric F against the adhesive sheet AS supported by the upper surface 23. This eliminates the need of a work for a user to press the fabric F against the adhesive sheet AS.

The printing apparatus 11 includes the transport roller pair 42 that transports the fabric F attached to the adhesive sheet AS. This eliminates the need of a work for a user to move the fabric F attached to the adhesive sheet AS.

The guide portion 81 includes the guide roller 98 that causes the fabric F to pass through the upper position Pu by coming into contact with the fabric F, and the leg portion 85 that extends in the vertically downward direction from the guide roller 98 and rotatably supports the second shaft 82. Then, the leg portion 85 includes the engaging portion 89 that can engage with the engaged portion 79 provided at the upper surface 23. According to this, the guide portion 81 can be easily attached to and detached from the upper surface 23 of the apparatus main body 20.

Although the printing apparatus 11 according to the above-described embodiments of the present disclosure is basically assumed to have the configuration as described above, it goes without saying that modification, omission, and the like of part of the configuration is possible within a range that does not deviate from the scope and gist of the present disclosure. Further, the above-described embodiments and other embodiments described below can be carried out in combination with one another within a technically consistent range. Hereinafter, other embodiments will be described.

In the above-described embodiment, when the process of attaching the fabric F to the adhesive sheet AS is performed, the core tube CT around which the adhesive sheet AS is wound may be fixed to the second shaft 82. In this case, the adhesive sheet AS and the protective sheet SS provided at the adhesive layer of the adhesive sheet AS are wound around the core tube CT in a direction such that the adhesive layer is on an inner side of the base material of the adhesive sheet AS. In this case, when the adhesive sheet AS is pulled out from the second shaft 82 in the +Y direction, the core tube CT around which the adhesive sheet AS is wound is fixed to the second shaft 82 in a direction such that the second shaft 82 rotates clockwise when viewed from the -X direction side of the second shaft 82.

Then, the end of the protective sheet SS peeled off from the adhesive sheet AS is fixed to the core tube CT fixed to the first shaft 72 of the feeding unit 71 via the -Z direction and the -Y direction of the second shaft 82. Then, the coupling shaft 91 is moved to the coupling position. Then, when the adhesive sheet AS is pulled out from the second shaft 82 in the +Y direction, the second shaft 82 rotates clockwise when viewed from the -X direction side of the second shaft 82. As a result, the second toothed gear 93, the first toothed gear 92, and the coupling shaft 91 constituting the driving mechanism 90 rotate, and thus the first shaft 72 rotates counterclockwise when viewed from the -X direction side of the first shaft 72. When the first shaft 72 rotates, the protective sheet SS peeled off from the adhesive sheet AS is wound by the core tube CT fixed to the first shaft 72.

In the above-described embodiment, the first toothed gear 92 being a driving toothed gear of the driving mechanism 90 and the second toothed gear 93 being a driven toothed gear need not mesh with each other for rotating the first shaft 72 and the second shaft 82 in conjunction with each other. For example, the driving mechanism 90 may include an intermediate toothed gear that is inserted between the first toothed gear 92 and the second toothed gear 93 and transmits rotation of the first toothed gear 92 to the second toothed gear 93. Similarly to the above-described embodiment, when a rotation direction of the second toothed gear 93 is opposite to a rotation direction of the first toothed gear 92, the driving mechanism 90 may include an even number of intermediate toothed gears.

When the rotation direction of the second toothed gear 93 is the same as the rotation direction of the first toothed gear 92, the driving mechanism 90 may include an odd number of intermediate toothed gears. In addition, for example, the driving mechanism 90 may include the first toothed gear 92 that rotates together with the first shaft 72, the second toothed gear 93 that rotates together with the second shaft 82, and a chain wound around the first toothed gear 92 and the second toothed gear 93. According to these, the fabric F of the attachment specification can be produced by using the adhesive sheet AS in which the adhesive sheet AS and the protective sheet SS provided at the adhesive layer of the adhesive sheet AS are wound around the core tube CT in the direction such that the adhesive layer is on the inner side of the base material.

In this case, when the adhesive sheet AS is pulled out from the feeding unit 71 in the +Y direction, the core tube CT around which the adhesive sheet AS is wound is fixed to the first shaft 72 in a direction such that the first shaft 72 rotates clockwise when viewed from the -X direction side of the first shaft 72. Then, the end of the protective sheet SS peeled off from the adhesive sheet AS is fixed to the core tube CT fixed to the second shaft 82. Then, the coupling shaft 91 is moved to the coupling position. Then, when the adhesive sheet AS is pulled out from the feeding unit 71 in the +Y direction, the first shaft 72 rotates clockwise when viewed from the - X direction side of the first shaft 72. Accordingly, the coupling shaft 91, the first toothed gear 92, and the second toothed gear 93 constituting the driving mechanism 90 rotate, and thus the second shaft 82 rotates clockwise when viewed from the -X direction side of the second shaft 82. Then, when the second shaft 82 rotates, the protective sheet SS peeled off from the adhesive sheet AS is wound by the core tube CT fixed to the second shaft 82.

In the above-described embodiment, the driving mechanism 90 need not include the first toothed gear 92 and the second toothed gear 93. In this case, the driving mechanism 90 may include a first pulley that rotates together with the first shaft 72, a second pulley that rotates together with the second shaft 82, and a belt that is wound around the first pulley and the second pulley. When the rotation direction of the second toothed gear 93 is opposite to the rotation direction of the first toothed gear 92, the belt is wound in a parallel manner (as an open belt) between the first pulley and the second pulley. In addition, when the rotation direction of the second toothed gear 93 is the same as the rotation direction of the first toothed gear 92, the belt is wound in a crossed manner (as a cross belt) between the first pulley and the second pulley.

In the above-described embodiment, the driving mechanism 90 may include a collecting motor that rotates the second shaft 82. In addition, the driving mechanism 90 may include a feeding motor that rotates the first shaft 72. In this case, driving of the collecting motor and the feeding motor is controlled by the control unit 66. Then, for example, when the process of attaching the fabric F to the adhesive sheet AS fed out from the feeding unit 71 is performed, the control unit 66 may control driving of the collecting motor based on a feeding amount of the adhesive sheet AS. Accordingly, it is possible to wind the protective sheet SS peeled off from the adhesive sheet AS around the second shaft 82 with a good degree. In addition, in this case, the driving mechanism 90 need not include the first toothed gear 92 and the second toothed gear 93.

In the above-described embodiment, the guide portion 81 may be fixed to the apparatus main body 20. Then, the first shaft 72 may be rotatably supported by the leg portions 85R and 85L of the guide portion 81 in the same mode as the second shaft 82. In this case, the first toothed gear 92 is provided at an end of the first shaft 72 in the -X direction in the same mode as the second toothed gear 93. Further, in this case, the biasing portion 76 may be provided at the leg portion 85R so that the contact body 76p presses a peripheral surface of the first shaft 72 toward the center of rotation of the first shaft 72.

In the above-described embodiment, the guide portion 81 may include a collecting unit that fixes the core tube CT around which the protective sheet SS is wound, instead of the second shaft 82. The collecting unit may have, for example, the same configuration as that of the feeding unit 71. In this case, the first shaft 72 of the collecting unit is inserted into and fixed to the core tube CT around which the protective sheet SS is wound. Then, when the first shaft 72 of the collecting unit rotates, the protective sheet SS is wound by the core tube CT. In addition, in this case, the second toothed gear 93 may be provided at an end of a coupling shaft in the -X direction rotatably supported by the leg portion 85R in the same mode as the first toothed gear 92. Then, the second toothed gear 93 may be coupled to the first shaft 72 of the collecting unit by a tip end of the coupling shaft being inserted into the coupling hole 73h of the first shaft 72 of the collecting unit. Then, the first shaft 72 of the collecting unit and the second toothed gear 93 may rotate integrally.

In the above-described embodiment, the engaging portion 89 provided at an end of the leg portion 85 in the +Z direction may be a recess that opens facing in the -Z direction so as to be engageable with the protrusion-shaped engaged portion 79 provided at the apparatus main body 20.

In Embodiment 2 described above, the end portion 23e of the upper surface 23 in the printing apparatus 11 need not be located on the +Y direction side with respect to a front surface of the heating unit 51. For example, similarly to Embodiment 1, the position of the end portion 23e may be a position on the -Y direction side with respect to the front surface of the heating unit 51, or may be a position which is the same position as the front surface of the heating unit 51 in the Y-axis direction. In this case, the fabric F of the attachment specification wound by the winding unit 46 may be in contact with the front surface of the heating unit 51 between the end portion 23e and the winding unit 46.

In the above-described embodiment, pressing of the fabric F against the adhesive sheet AS supported by the upper surface 23 need not be performed for the process of attaching the fabric F to the adhesive sheet AS. For example, the fabric F may be attached to the adhesive sheet AS by pressing the fabric F against the adhesive sheet AS which is pulled out in the forward direction and in the downward direction from the feeding unit 71 and supported by the front surface 24 of the apparatus main body 20. In addition, for example, the fabric F may be attached to the adhesive sheet AS by pressing the fabric F against the adhesive sheet AS which is pulled out in the forward direction and in the downward direction from the feeding unit 71 and supported by the front surface the heating unit 51. Further, for example, the fabric F may be attached to the adhesive sheet AS by pressing the fabric F against the adhesive sheet AS which is pulled out toward the rear surface 25 of the apparatus main body 20 in the downward direction from the feeding unit 71 and supported by the rear surface 25. In these cases, the front surface 24 and the rear surface 25 of the apparatus main body 20 and the front surface of the heating unit 51 are examples of the support portion SP that supports the adhesive sheet AS from which the protective sheet SS is peeled off and the adhesive layer is exposed.

## Claims

1. A printing apparatus, comprising:
a first shaft around which an adhesive sheet is wound, the adhesive sheet including a base material and an adhesive layer formed on the base material and being provided with a protective sheet on the adhesive layer;
a second shaft around which the protective sheet is wound, the protective sheet being peeled off from the adhesive sheet fed out from the first shaft;
a driving mechanism configured to rotate the second shaft;
a support portion configured to support the adhesive sheet from which the protective sheet is peeled off and the adhesive layer is exposed;
a guide portion configured to pass a fabric through an upper position being vertically upward above the first shaft and the second shaft and guide the fabric toward the support portion; and
a printing unit configured to perform printing on the fabric attached to the adhesive sheet at the support portion.

2. The printing apparatus according to claim 1, wherein
the driving mechanism includes
a first toothed gear configured to rotate together with the first shaft, and
a second toothed gear configured to rotate together with the second shaft, and
the first toothed gear and the second toothed gear mesh with each other so that the first shaft and the second shaft rotate in conjunction with each other.

3. The printing apparatus according to claim 2, wherein
the number of teeth of the first toothed gear is larger than the number of teeth of the second toothed gear, and
the driving mechanism includes a torque limiter configured to limit rotational torque transmitted from the second toothed gear to the second shaft in accordance with rotation of the second toothed gear.

4. The printing apparatus according to claim 1, comprising a biasing portion configured to come into contact with the first shaft to apply force toward a center of rotation of the first shaft.

5. The printing apparatus according to claim 1, comprising a pressing unit configured to press the fabric against the adhesive sheet supported by the support portion.

6. The printing apparatus according to claim 1, comprising a transport unit configured to transport the fabric attached to the adhesive sheet.

7. The printing apparatus according to claim 1, wherein
the guide portion
rotatably supports the second shaft,
includes the driving mechanism, and
is detachably provided at an apparatus main body including the support portion.

8. The printing apparatus according to claim 7, wherein
the guide portion includes
a contact portion configured to come into contact with the fabric to cause the fabric to pass through the upper position, and
a leg portion extending in a vertically downward direction from the contact portion, and rotatably supporting the second shaft, and
the leg portion includes an engaging portion engageable with an engaged portion provided at the support portion.

9. The printing apparatus according to claim 1, wherein
the guide portion includes, at the upper position, a position guide portion configured to guide a position of the fabric in a width direction of the fabric intersecting a direction in which the fabric faces the support portion.
